# EUROPÄISCHE PATENTANMELDUNG

(11) **EP 0 990 400 A2**
(43) Veröffentlichungstag der Anmeldung: **05.04.2000**
(21) Anmeldenummer: 99115867.6
(22) Anmeldetag: 12.08.1999
(51) Int. Cl.: A45C 11/18, B60R 25/00

(54) **Schutzhülle für elektronische Schlüssel**

(30) Priorität: 02.09.1998 DE 19839944; 09.07.1999 DE 19931970
(71) Anmelder: Mannesmann VDO Aktiengesellschaft, 60388 Frankfurt am Main (DE)
(72) Erfinder: Sievers, Christopher, 63450 Hanau (DE)
(74) Vertreter: Klein, Thomas, Dipl.-Ing.

(57) **Zusammenfassung**

Es wird eine Schutzhülle (15) zum Aufbewahren eines elektronischen Schlüssels (1) angegeben. Zur Abschirmung von Signalen, die den Schlüssel (1) aktivieren würden, ist die Schutzhülle (15) aus einem für das Anregungssignal undurchlässigen Material gefertigt.

## Beschreibung

Die Erfindung betrifft eine Schutzhülle zum Aufbewahren eines elektronischen Schlüssels, welcher zum berührunglosen Entriegeln eines Kraftfahrzeuges mit einer Empfangseinheit zum Empfang eines vom Kraftfahrzeug ausgesandten Anregungssignales und einer Sendeeinheit zum Aussenden eines Identifikationssignales nach Empfang des Anregungssignales ausgestattet ist.

Zum berührungslosen Entriegeln eines Kraftfahrzeuges werden in zunehmendem Maße elektronische Schlüssel eingesetzt. Derartige Schlüssel reagieren auf ein Anregungssignal, welches von dem Kraftfahrzeug in regelmäßigen Abständen ausgesendet wird. Der Schlüssel sendet bei Empfang dieses Signals seinerseits ein Identifikationssignal aus, welches vom Kraftfahrzeug empfangen und verifiziert wird. Sobald eine Identifikation des Schlüssels erfolgreich durchgeführt werden konnte, wird das Kraftfahrzeug entriegelt und für den Besitzer des Schlüssels freigegeben.

Bisherige Erfahrungen haben gezeigt, daß es durchaus Methoden gibt, den Schlüssel auch über weitere Entfernungen hinweg zum Aussenden des Identifikationssignals zu veranlassen und das Identifikationssignal aufzufangen. Auf diese Weise kann das Identifikationssignal des Schlüssels in den Besitz Unbefugter gelangen und zum Öffnen des Kraftfahrzeuges mißbraucht werden.

Ferner wird bei jeder Abgabe des Identifikationssignals Energie verbraucht. Dadurch wird Energie verschwendet, wenn der Schlüssel Anregungssignale fremder Kraftfahrzeuge mißinterpretiert und ein Identifikationssignal sendet oder wenn der Schlüssel ständig zur Aussendung der Identifikationssignale angeregt wird, auch während das Kraftfahrzeug nicht benutzt wird.

Aufgabe der vorliegenden Erfindung ist es, eine Vorrichtung zum Schutze eines elektronischen Schlüssels für ein Kraftfahrzeug anzugeben, welche den Schlüssel gegen Fremderregung durch Unbefugte schützt.

Diese Aufgabe wird dadurch gelöst, daß die Schutzhülle zur Verhinderung der Aussendung des Identifikationssignales aus einem für das Anregungssignal undurchlässigen Material besteht. Aufgrund der abschirmenden Wirkung des Hüllenmaterials können von außen keine Signale mehr den Schlüssel erreichen. Er bleibt damit deaktiviert, solange er sich in der Hülle befindet und kann nicht zur Aussendung des Identifikationssignals angeregt werden.

Vorteilhafterweise wird das Anregungssignal in einem anderen Wellenlängenbereich als das Identifikationssignal ausgesandt.

Zur Abschirmung von Funkwellen ist weiterhin vorgesehen, daß die Schutzhülle aus einem Material mit für Funkwellen im Wellenlängenbereich des Anregungssignals undurchlässigen metallhaltigen Gewebe besteht. Alternativ kann vorgesehen sein, daß die Schutzhülle aus Metall oder aus Kunststoff besteht. Zur Abschirmung gegen Funkwellen kann der Kunststoff mit Metallpartikeln oder mit einer metallischen Schicht versehen sein.

In einer andere Ausgestaltung der Erfindung betrifft eine Vorrichtung zur Freigabe und/oder Aktivierung/Deaktivierung einer Sicherheitseinrichtung, insbesondere einer Zugangseinrichtung für ein Kraftfahrzeug, bei welcher nach Erhalt eines durch einen Sender einer Übertragungseinrichtung ausgesendeten Anregungssignales von einer tragbaren Sendeeinheit (Funkschlüssel) eine codierte Information (Identifikationssignal) ausgesandt und von einem Empfänger der Übertragungseinrichtung empfangen wird, wobei ein Steuergerät das empfangene Identifikationssignal mit einer vorgegebenen codierten Information vergleicht und bei Übereinstimmung ein Ansteuersignal an die Sicherheitseinrichtung abgibt. Erfindungsgemäß ist die tragbare Sendeeinheit zur Verhinderung der Aussendung eines Identifkationssignales in einer Schutzhülle angeordnet, welche aus einem für das Anregungssignal undurchlässigen Material besteht.

Die Erfindung läßt zahlreiche Ausführungsformen zu. Eine davon ist in der Zeichnung anhand mehrerer Figuren dargestellt und nachfolgend beschrieben. Es zeigt:
- Figur 1: Sicherheitseinrichtung für ein Kraftfahrzeug
- Figur 2: elektronischer Schlüssel mit flexiblem Etui
- Figur 3: elektronischer Schlüssel mit festem Etui

Gleiche Teile sind in den Figuren mit gleichen Bezugszeichen versehen.

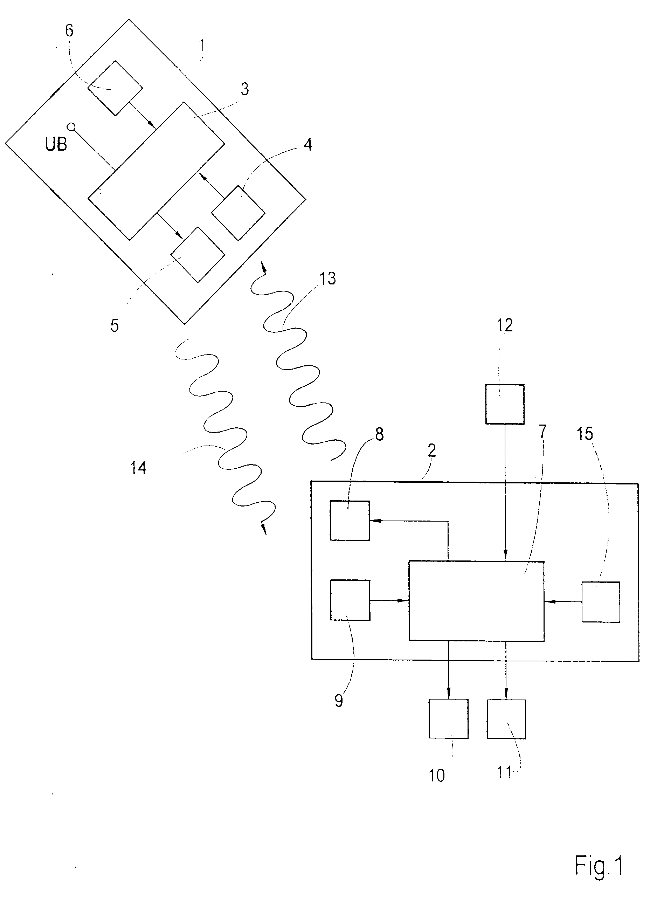

Bei dem in Figur 1 gezeigten erfindungsgemäßen Fahrzeugzugangs- und Fahrberechtigungssystem wird durch eine berührungslose Abfrage eines als Sender 1 ausgebildeten Identifikationsgebers (Funkschlüssel) das Öffnen und das Starten eines Fahrzeuges wesentlich komfortabler gestaltet. Der Sender 1 kann dabei beliebig am Körper (zum Beispiel in der Hosen- oder Manteltasche) getragen werden und muß nicht explizit bedient werden. Der Funkschlüssel wird durch ein Startsignal der Übertragungseinrichtung ohne manuelles Eingreifen des Nutzers vollautomatisch aktiviert. Das Freigabesignal wird nur dann ausgesendet, wenn die den Funkschlüssel tragende Person in einem vorgegebenen Abstand zum Kraftfahrzeug steht, welcher innerhalb der Reichweite des Senders der Übertragungsvorrichtung liegt

Die Vorrichtung weist eine als Sicherheitsgerät 2 ausgebildete Übertragungseinrichtung auf, welche in einem in Figur 1 dargestellten Kraftfahrzeug fest installiert ist. Der Funkschlüssel 1 enthält eine Recheneinheit 3, welche über einen Langwellenempfänger 4 und einen Kurzwellensender 5 verfügt. Von einem Zufallsgenerator 6 werden Zahlen generiert, aus welchen mit Hilfe eines in der Recheneinheit 3 abgelegten Algorithmus eine Codierung erzeugt wird.

Das Sicherheitsgerät 2 enthält ebenfalls eine Recheneinheit 7, die mit einem Langwellensender 8 und einem Kurzwellenempfänger 9 verbunden ist. Darüber hinaus stellt die Recheneinheit 7 ein Steuergerät dar, welches mit einer Zentralverriegelung 10 und einer Wegfahrsperre 11 des Kraftfahrzeuges zu deren Ansteuerung verbunden ist. Ein an einem Türgriff des Kraftfahrzeugs angeordneter Sensor 12 liefert ein Signal an die Recheneinheit 7, sobald ein Türgriff betätigt wird. Auch diese Recheneinheit 7 enthält eine Zufallszahl von einem Zufallsgenerator 15, welches sie mit Hilfe eines Algorithmus verarbeitet, der identisch mit dem in der Recheneinheit 3 abgelegten Algorithmus funktioniert.

Zwischen dem Funkschlüssel 1 und dem Sicherheitsgerät 2 werden berührungslos Signale ausgetauscht. Erhält die Recheneinheit 7 des Sicherheitsgerätes 2 ein Signal vom Sensor 12, erzeugt die Recheneinheit 7 ein Startsignal 13, welches über den Langwellensender 8 ausgesendet wird (Challenge).

Diese Startsignal 13 besteht aus mindestens zwei Codeanteilen, wobei der erste Codeanteil ein der Fahrzeugkennung entsprechender Festcode und der zweite Codeanteil eine variable Kennung beinhaltet, welche als eigentliches Challengesignal dient. Es ist aber auch vorstellbar, daß beide Teile des Startsignales 13 als Festcode ausgebildet sind bzw. beide Teile eine variable Kennung beinhalten. Es ist der Vorteil der variablen Kennung, daß diese nach jedem Aussenden durch die Recheneinheit 7 des Steuergerätes im Kraftfahrzeug geändert werden kann, was eine zusätzliche Sicherheit des Systems ermöglicht.

Dieses Anregungssignal 13 wird vom Langwellenempfänger 4 des Funkschlüssels 1 empfangen, worauf die Recheneinheit 3 des Funkschlüssels 1 aktiviert wird und die Aussendung eines Identifikationssignals 14 veranlaßt (Response).

Der Kurzwellenempfänger 9 des Sicherheitsgerätes 2 empfängt das Signal 14 und leitet es an die Recheneinheit 7 weiter, welche das Identifikationssignal 14 mit einem in ihm gespeicherten oder durch den Algorithmus erzeugten Code vergleicht. Bei Übereinstimmung der Informationen gibt die Recheneinheit 7 entweder ein Ansteuersignal an die Zentralverriegelung 10 des Fahrzeuges zum Öffnen bzw. zum Schließen der Fahrzeugtüren und/oder an eine Wegfahrsperre 11 zur Aktivierung bzw. Deaktivierung des Antriebs des Kraftfahrzeuges aus.

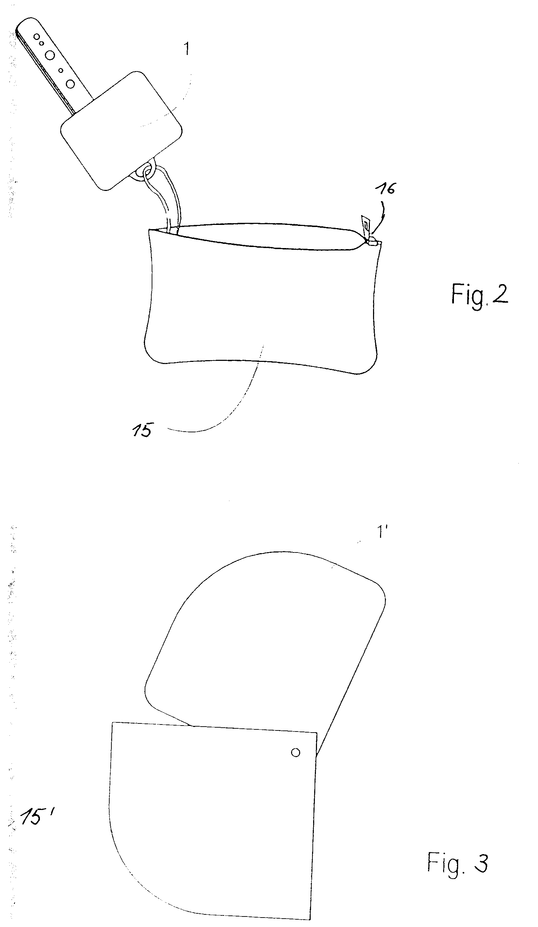

Für einen elektronischen Schlüssel 1, wie er in Figur 2 dargestellt ist, ist eine Schutzhülle vorgesehen, welche ganz aus einem weichen, innen mit Metallgewebe beschichteten Kunststoff besteht. Die Schutzhülle ist als Schlüsselmäppchen 15 ausgebildet und kann mit einem Reißverschluß 16 verschlossen werden.

Figur 3 zeigt einen elektronischen Schlüssel 1 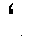 , der ohne mechanischen Teil auskommt. Der Schlüssel 1 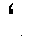 ist in einem festen Etui 15' drehbar gelagert und kann nach Gebrauch in das Etui eingeklappt werden.

## Patentansprüche

1. Schutzhülle zum Aufbewahren eines elektronischen Schlüssels, welcher zum berührungslosen Entriegeln eines Kraftfahrzeuges mit einer Empfangseinheit zum Empfang eines vom Kraftfahrzeug ausgesandten Anregungssignales und einer Sendeeinheit zum Aussenden eines Identifikationssignales bei Auftreten des Anregungssignals ausgestattet ist, **dadurch gekennzeichnet**, daß zur Verhinderung der Aussendung eines Identifikationssignales (14) die Schutzhülle (15, 15 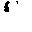 ) aus einem für das Anregungssignal (13) undurchlässigen Material besteht.

2. Schutzhülle nach Anspruch 1, **dadurch gekennzeichnet**, daß das Anregungssignal (13) in einem anderen Wellenlängenbereich ausgesandt wird als das Identifikationssignal (14).

3. Schutzhülle nach Anspruch 1 oder 2, **dadurch gekennzeichnet**, daß die Schutzhülle (15, 15') aus einem Material mit für Funkwellen im Wellenlängenbereich des Anregungssignals (13) undurchlässigen metallhaltigen Gewebe besteht.

4. Schutzhülle nach einem der Ansprüche 1 bis 3, **dadurch gekennzeichnet**, daß die Schutzhülle (15, 15') aus elektrisch leitendem Kunststoff besteht.

5. Schutzhülle nach Anspruch 1, **dadurch gekennzeichnet**, daß die Schutzhülle (15, 15') aus Metall besteht.

6. Vorrichtung zur Freigabe und/oder Aktivierung/Deaktivierung einer Sicherheitseinrichtung, insbesondere einer Zugangseinrichtung für ein Kraftfahrzeug, bei welcher nach Erhalt eines durch einen Sender einer Übertragungseinrichtung ausgesendeten Anregungssignales von einer tragbaren Sendeeinheit (Funkschlüssel) eine codierte Information (Identifikationssignal) ausgesandt und von einem Empfänger der Übertragungseinrichtung empfangen wird, wobei ein Steuergerät das empfangene Identifikationssignal mit einer vorgegebenen codierten Information vergleicht und bei Übereinstimmung ein Ansteuersignal an die Sicherheitseinrichtung abgibt **dadurch gekennzeichnet**, daß die tragbare Sendeeinheit(1, 1') zur Verhinderung der Aussendung eines Identifikationssignales (14) in einer Schutzhülle (15, 15') angeordnet ist, welche aus einem für das Anregungssignal (13) undurchlässigen Material besteht.
